# EUROPÄISCHE PATENTSCHRIFT

(11) **EP 2 891 166 B1**
(45) Veröffentlichungstag und Bekanntmachung des Hinweises auf die Patenterteilung: **11.05.2016**
(21) Anmeldenummer: 13744514.4
(22) Anmeldetag: 30.07.2013
(51) Int. Cl.: H01H 3/30, H01H 9/00

(54) **KRAFTSPEICHER FÜR EINEN LASTSTUFENSCHALTER**
FORCE ACCUMULATOR FOR AN ON-LOAD TAP CHANGER
ACCUMULATEUR DE FORCE POUR UN COMMUTATEUR D'ÉTAGE DE CHARGE

(30) Priorität: 28.08.2012 DE 102012107900
(43) Veröffentlichungstag der Anmeldung: 08.07.2015
(73) Patentinhaber: Maschinenfabrik Reinhausen GmbH, 93059 Regensburg (DE)
(72) Erfinder: WREDE, Silke, 93197 Zeitlarn (DE)
(86) Internationale Anmeldenummer: PCT/EP2013/066003
(87) Internationale Veröffentlichungsnummer: WO 2014/032888

(56) Entgegenhaltungen:
- DE-B- 1 184 580
- DE-B3-102011 008 688
- FR-A- 992 592

## Beschreibung

Die vorliegende Erfindung bezieht sich auf einen Kraftspeicher für einen Laststufenschalter. Der Kraftspeicher weist ein an einer drehbaren Antriebswelle angeordnetes erstes Zahnrad auf, das über mindestens ein weiteres Zahnrad eine Kurbel antreibt. Die Kurbel steht mit einem elastischen Element mechanisch in Verbindung, das beim Aufziehen eines Antriebselements spannbar ist. Ein Abtriebselement ist nach dem Spannen des elastischen Elements auslösbar und schwenkt sich sprungartig.

Laststufenschalter der eingangs genannten Art sind im Stand der Technik allseits bekannt und gebräuchlich. Sie dienen zur unterbrechurigslosen Umschaltung zwischen verschiedenen Wicklungsanzapfungen von Stufentransformatoren. Da diese Umschaltung üblicherweise sprungartig erfolgt, besitzen Laststufenschalter in der Regel einen Kraftspeicher.

Aus dem Stand der Technik bekannte Kraftspeicher werden zu Beginn jeder Betätigung des Laststufenschalters von dessen kontinuierlich drehenden Antriebswelle aufgezogen, d. h. gespannt. Die bekannten Kraftspeicher, wie beispielsweise in der deutschen Offenlegungsschrift DE 19 56 369 A und der deutschen Patentschrift DE 28 06 282 C2 offenbart, bestehen im Wesentlichen aus einem Aufzugsschlitten und einem Sprungschlitten, zwischen denen Federn als Energiespeicher angeordnet sind. Zudem sind Führungsstangen vorgesehen, auf denen der Aufzugsschlitten als auch der Sprungschlitten unabhängig voneinander längsbeweglich gelagert sind. Gleichzeitig bilden die Führungsstangen die Führung für die Federn, derart, dass jeweils eine Feder jeweils eine Führungsstange umschließt. Der Aufzugsschlitten wird durch einen mit der Antriebswelle verbundenen Exzenter linear relativ zum Sprungschlitten hin bewegt, wodurch die dazwischen angeordneten Federn gespannt werden. Hat der Aufzugsschlitten seine Endposition erreicht, wird die Arretierung des Sprungschlittens gelöst.

Besonders die beidseitige Längsführung der längsverschiebbaren Aufziehschlitten und Spannschlitten mittels parallel liegender Führungsstangen stellt hohe und höchste Genauigkeitsanforderungen dar. Weiterhin erfolgt bei diesen Kraftspeichern eine doppelte Umwandlung der Bewegungsrichtung. Eine Drehbewegung der Antriebswelle wird in eine Längsbewegung des Kraftspeichers umgewandelt, dessen Längsbewegung nach Auslösung wiederum in eine Drehbewegung der Schaltwelle zur Betätigung des Stufenschalters zurückverwandelt wird. Dies ist kompliziert, ungeeignet und überflüssig für ohnehin linear bewegbare Stufenschalter bzw. deren Lastumschalter. Ferner weisen diese Kraftspeicher viele Reibungsteile auf, welche mechanische Störungen fördern und die Herstellkosten erhöhen.

So sind bereits Kraftspeicher bekannt, die eine kontinuierliche Drehbewegung einer Antriebswelle in eine sprungartige, schnelle Schwenkbewegung eines Abtriebswelle umwandeln, so dass keine gleitende Reibung mehr auftritt und der Widerstand gering ist. Dies ist beispielsweise in den deutschen Patentschriften DE 10 2006 008 338 B3, DE 10 2009 034 627 B3 und DE 10 2010 046 280 B3 beschrieben. Die sprungartige Drehbewegung der Abtriebswelle wird dadurch ermöglicht, dass eine oder mehrere gespannte Federn sprungartig ausgelöst werden. Solche Federn können sowohl Zug- als auch Druckfedern sein. Das Prinzip dabei ist immer das Gleiche. Eine sich drehende Antriebswelle spannt die Feder bzw. die Federn bis zu einem Maximalpunkt, danach entspannen sich diese sprungartig und bewegen dadurch die Abtriebswelle mit. Kraftspeicher dieser Art sind in den unterschiedlichsten Ausführungsformen bekannt und zeichnen sich dadurch aus, dass sie auf die aufwändige technische Wandlung einer anfänglichen translatorischen Aufzugsbewegung in eine schnelle, für die eigentliche Lastumschaltung benötigte, rotatorische Hauptbewegung zur Betätigung der Schaltkontakte verzichten.

Ferner ist in der chinesischen Gebrauchsmusterschrift CN 201845670 U ein Kraftspeicher für einen Laststufenschalter gemäß dem Oberbegriff des vorliegenden Anspruchs 1 offenbart, wobei hier viele Einzelbauteile zwischen einer oberen und unteren Montageplatte angeordnet bzw. auf diesen montiert sind.

Nachteilig an diesen Stand der Technik ist, dass der Kraftspeicher aus vielen einzelnen Bauteilen aufgebaut ist, welche zum einen den Aufbau erheblich komplizieren und zum anderen einen großen Bauraum an einem Laststufenschalter vereinnahmen. Bedingt durch die vielen Bauteile ist ein Austausch von Bauteilen bei einer mechanischen Störung sehr arbeits- und kostenaufwendig.

Der Erfindung liegt die Aufgabe zugrunde, einen platzsparenden und einfachen Kraftspeicher für einen Laststufenschalter zu schaffen, der geringe Herstell- und Wartungskosten verursacht sowie Energieverluste bzw. den Energieverbrauch gering hält.

Das Dokument FR 992 592 A offenbart einen Kraftspeicher gemäß dem Oberbegriff des Patentanspruchs 1.

Diese Aufgabe wird durch einen Kraftspeicher für einen Laststufenschalter gelöst, der die Merkmale des Anspruchs 1 umfasst

Der erfindungsgemäße Kraftspeicher für einen Laststufenschalter weist ein an einer drehbaren Antriebswelle angeordnetes erstes Zahnrad auf, das über mindestens ein weiteres Zahnrad eine Kurbel antreibt. Dabei wird der Kraftspeicher durch die Antriebswelle bei jedem Umschaltvorgang zentrisch angetrieben. Für einen Fachmann ist selbstverständlich, dass anstelle eines zentrischen Antriebs durch die Antriebswelle, auch ein exzentrischer Antrieb denkbar ist. Dabei wird die drehbare Antriebswelle, die auch gleichzeitig der Antrieb des Wählers ist, von einem Motor (mit Getriebe), der 180 oder 360 Grad bereitstellt, angetrieben. Denkbar ist aber auch, dass die Antriebswelle direkt von einem Schrittmotor angetrieben wird. Vorteilhafterweise kann hier die Antriebswelle bei jedem Schaltschritt um 180 Grad gedreht werden, so dass das der Antriebswelle angeordnete erste Zahnrad ebenfalls für diesen Schaltschritt angetrieben wird.

Da allgemein bekannt ist, dass Zahnräder eine formschlüssige und schlupffreie Kraftübertragung mit wechselnder Drehrichtung übertragen, ist in einer bevorzugten Ausführungsform zwischen dem ersten Zahnrad und dem Zahnrad, das die Kurbel antreibt, ein weiteres Zahnrad angeordnet, so dass die Kurbel die gleiche Drehrichtung wie die Antriebswelle besitzt.

Dabei steht die Kurbel mit einem elastischen Element mechanisch in Verbindung, das beim Aufziehen eines Antriebselements spannbar ist. Ein Abtriebselement ist nach dem Spannen des elastischen Elements auslösbar und schwenkt sich sprungartig.

Erfindungsgemäß ist das Antriebselement eine Schwinge. Die Schwinge weist dabei eine erste Schwingenrolle und eine zweite Schwingenrolle auf, die jeweils im Wechsel eine erste Klinke und eine zweite Klinke betätigen. Dabei sind der ersten Klinke am Abtriebselement eine erste Rastposition und eine zweite Rastposition zugeordnet. Ebenfalls sind der zweiten Klinke am Abtriebselement eine erste Rastposition und eine zweite Rastposition zugeordnet. Somit befinden sich die erste Klinke und die zweite Klinke, in Abhängigkeit von der Stellung der Schwinge, wechselseitig in der ersten Rastposition und in der zweiten Rastposition.

Um die beiden Klinken in die ersten bzw. in die zweiten Rastpositionen zu bringen, weist die erste Klinke eine erste Klinkenrolle und die zweite Klinke eine zweite Klinkenrolle auf. Anzumerken ist auch, dass durch die Ausbildung der ersten Klinkenrolle und der zweiten Klinkenrollen und ihren zugeordneten ersten Rastpositionen und zweiten Rastpositionen das Abtriebselement gegen ein Verdrehen gesichert ist.

Ferner ist auch vorgesehen, dass die erste Klinke um eine erstes Klinkenlager und die zweite Klinke um ein zweites Klinkenlager schwenkbar ausgebildet ist.

Ebenso sieht der erfindungsgemäße Kraftspeicher vor, dass eine Koppel die Kurbel und die Schwinge mechanisch koppelt. Hierzu überträgt die von der Antriebswelle angetriebene Kurbel durch die mechanische Kopplung eine Drehbewegung auf die Koppel, so dass die mit einer Drehbewegung angetriebene Koppel durch die mechanische Verbindung mit der Schwinge ein Schwenken der Schwinge ermöglicht. Durch das Schwenken der Schwinge wird zum einen das elastische Element gespannt und auch beispielsweise die erste Schwingenrolle gegen die erste Klinke gedrückt-und damit die erste Klinke um das erste Klinkenlager gedreht. Dadurch wird auch die erste Klinkenrolle aus ihrer ersten Rastposition bewegt, was wiederum bedeutet, dass die Fixierung des Abtriebselements aufgehoben wird. Nach dieser Umschaltung wechselt somit die erste Klinkenrolle von der ersten Rastposition in die zweite Rastposition, wobei dabei gleichzeitig die zweite Klinkenüöllä von der zweiten Rastposition in die erste Rastposition wechselt. Haben die erste Klinkenfölle und die zweite Klinkenrolle wieder eine erste Rastposition bzw. zweite Rastposition erreicht, befindet sich der erfindungsgemäße Kraftspeicher wieder in einer Endstellung und die Lastumschalterstellung ist fixiert.

Vorzugsweise ist das elastische Element eine Feder. Die Feder ist dabei in einer bevorzugten Ausführungsform als Schenkelfeder ausgebildet, wobei aber auch jede andere im Stand der Technik bekannte Feder denkbar ist. Hierzu weist die Schenkelfeder zwei Schenkel auf, die abwechselnd mit einem Federanschlag des Abtriebselements und einem Federanschlag der Schwinge zusammenwirken. Insbesondere ist der Kraftspeicher derart ausgestaltet, dass bei einem Schwenken der Schwinge ein erster Schenkel der Schenkelfeder durch den Federanschlag des Abtriebselements festgehalten und ein zweiter Schenkel der Schenkelfeder mitgenommen wird, so dass dadurch die Schenkelfeder gespannt wird.

Insbesondere sieht der erfindungsgemäße Kraftspeicher auch eine Klinkenzugfeder vor, die die erste Klinke und die zweite Klinke mechanisch koppelt und die erste Klinke und die zweite Klinke gegen eine Außenkontur des Abtriebselements vorspannt, so dass die erste und zweite Klinkenrolle über die Klinkenzugfeder in die ersten Rastposition bzw. zweite Rastposition des Abtriebselements bringbar sind bzw. in diese gedrückt werden. Die Außenkontur des Abtriebselements ist als Kurve bzw. Steuerkurve für die erste und zweite Klinkenrolle ausgebildet.

Insbesondere ist das in den vorherigen Ausführungsformen beschriebene Abtriebselement ein Lastumschalterantriebsrad. Auf eine nähere Beschreibung und Darstellung des Abtriebselements als Lastumschalterantriebsrad wurde verzichtet, da dafür diverse im Stand der Technik bekannte und gebräuchliche Maschinenbauteile verwendbar sind. So ist es für den Fachmann selbstverständlich, dass das Lastumschalterantriebsrad beispielsweise aus einem gebohrten Werkstück besteht, in das weitere Bauelemente, wie beispielsweise Wälzlager, eingelassen werden.

Ein Vorteil des erfindungsgemäßen Kraftspeichers für einen Laststufenschalter besteht darin, dass aufgrund des gesamten Aufbaus und der wenig im Kraftspeicher verbauten Bauteile ein platzsparender und einfacher Kraftspeicher geschaffen ist. Auch bringt der Kraftspeicher durch die Anordnung der Schenkelfeder einen weiteren Vorteil mit sich, nämlich, dass der Kraftspeicher für Schaltungen in wechselnder Dreh- bzw. Schwenkrichtung und somit unabhängig von der Antriebsrichtung verwendet werden kann, hingegen im Stand der Technik bekannte radiale, reibreduzierte und damit verlustreduzierte Kraftspeicher für einen Laststufenschalter richtungsabhängig sind. Auch ist der erfindungsgemäße Kraftspeicher durch die allgemein wenig verbauten Bauteile gering in seinen Herstell- und Wartungskosten.

Ein weiterer Vorteil des erfindungsgemäßen Kraftspeichers ist, dass durch die Verwendung von Wälzlagern, wie bereits oben zum Abtriebselement beschrieben, die durch Reibung bedingten Energieverluste gering gehalten werden.

Nachfolgend sind die Erfindung und ihre Vorteile unter Bezugnahme auf die beigefügten Zeichnungen ausführlicher beschrieben. Es zeigen:
- Fig. 1: eine Perspektivansicht des erfindungsgemäßen Kraftspeichers von oben;
- Fig. 2: eine Perspektivansicht des in Fig. 1 gezeigten Kraftspeichers von unten;
- Fig. 3: eine Perspektivansicht des Kraftspeichers, wobei sich die erste Klinke in einer ersten Rastposition und die zweite Klinke in einer zweiten Rastposition am Abtriebselement befindet;
- Fig. 4: eine Perspektivansicht des Kraftspeichers nach Fig. 3;
- Fig. 5: eine weitere Perspektivansicht des Kraftspeichers, wobei die erste Klinke, die zweite Klinke und die Klinkenzugfeder zur mechanischen Kopplung beider Klinken nicht dargestellt sind;
- Fig. 6: eine weitere Perspektivansicht des Kraftspeichers, wobei der Übersicht halber die Zahnräder, die Kurbel und die Koppel nicht dargestellt sind;
- Fig. 7: eine Perspektivansicht des Kraftspeichers nach Fig. 6 von oben; und
- Fig. 8: eine Draufsicht auf den Kraftspeicher.

In den Figuren sind für gleiche oder gleich wirkende Elemente der Erfindung identische Bezugszeichen verwendet. Ferner sind der Übersicht halber nur Bezugszeichen in den einzelnen Figuren dargestellt, die für die Beschreibung der jeweiligen Figur erforderlich sind.

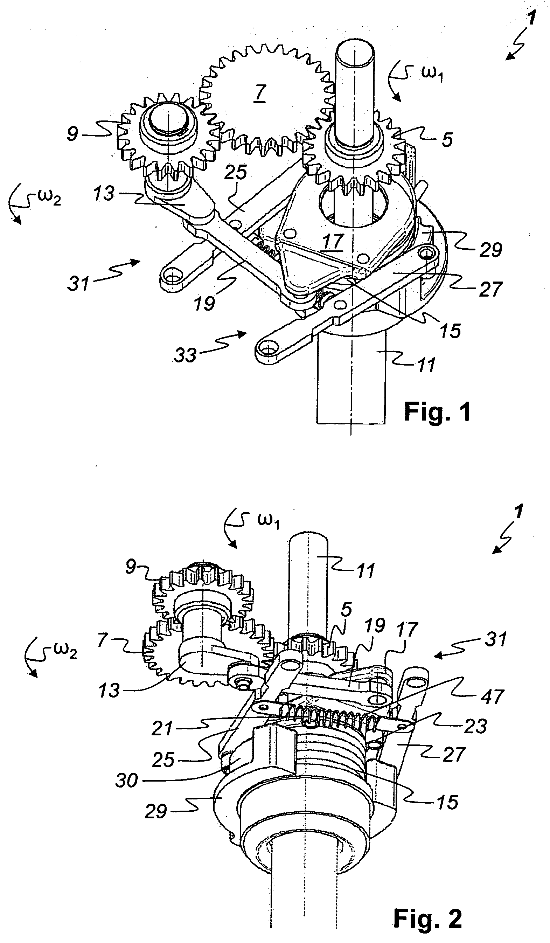

Figur 1 zeigt eine Perspektivansicht des erfindungsgemäßen Kraftspeichers 1 für einen Laststufenschalter von oben. Der Kraftspeicher 1'weist hier ein an einer drehbaren Antriebswelle 11 angeordnetes erstes Zahnrad 5 auf, das über ein drittes Zahnrad 9 eine Kurbel 13 antreibt. Zwischen dem ersten Zahnrad 5 und dem dritten Zahnrad 9, ist ein zweites Zahnrad 7 angeordnet, so dass ein Drehwinkel ω₂ der Kurbel 13 ein gleicher Drehwinkel ω₁ wie der der Antriebswelle 11 ist. Es ist für den Fachmann selbstverständlich, dass der erfindungsgemäße Kraftspeicher 1 in anderen Ausführungsformen auch mehr oder weniger als drei Zahnräder 5, 7, 9 vorsehen kann.

Da die Kurbel 13 mit einem elastischen Element 15 mechanisch in Verbindung steht, ist das elastische Element 15 beim Aufziehen eines Antriebselements 17 spannbar. Ein Abtriebselement 29 ist nach dem Spannen des elastischen Elements 15 auslösbar und schwenkt sich sprungartig.

Erfindungsgemäß ist das Antriebselement eine Schwinge 17. Vorzugsweise kann die Schwinge 17 eingelassene Wälzlager (nicht sichtbar) umfassen, so dass geringe Energieverluste durch Reibung entstehen.

Wie in Fig. 2 gezeigt, weist die Schwinge 17 eine erste Schwingenrolle 21 und eine zweite Schwingehrolle 23 auf, die jeweils im Wechsel eine erste Klinke 25 und eine zweite Klinke 27 betätigen, wobei die erste Klinke 25 um eine erstes Klinkenlager 31 und die zweite Klinke 27 um ein zweites Klinkenlager 33 schwenkbar ausgebildet ist.

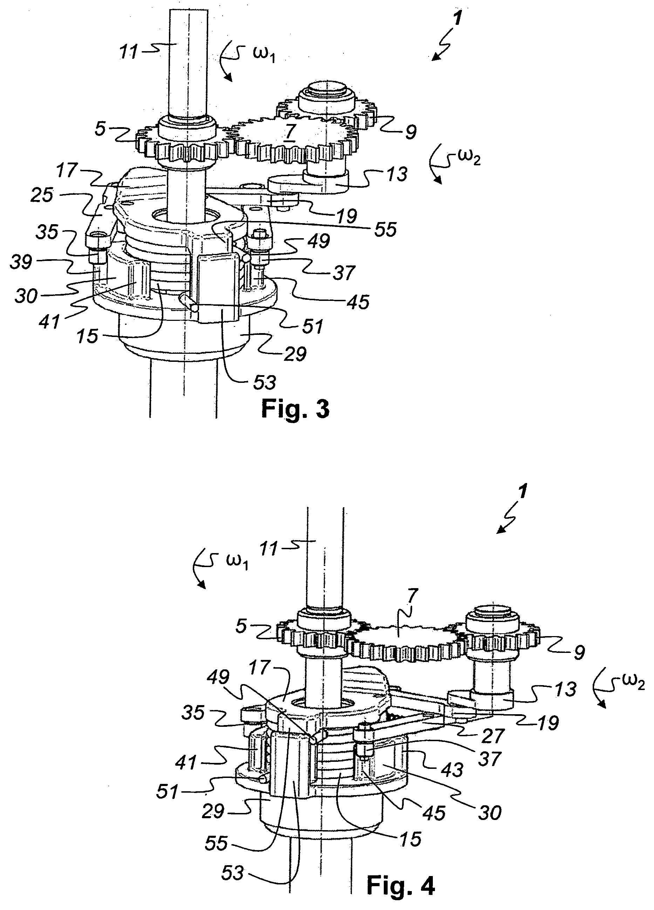

Dabei sind erfindungsgemäßferner, wie in den weiteren Perspektivansichten des Kraftspeichers 1 nach den Fig. 3 und 4 gezeigt, der ersten Klinke 25 am Abtriebselement 29 eine erste Rastposition 39 und eine zweite Rastposition 41 und der zweiten Klinke 27 am Abtriebselement 29 ebenfalls eine erste Rastposition 43 und eine zweite Rastposition 45 zugeordnet. Somit befinden sich die erste Klinke 25 und die zweite Klinke 27, in Abhängigkeit von der Stellung der Schwinge 17, wechselseitig in der ersten Rastposition 39, 43 und in der zweiten Rastposition 41, 45.

Wie ebenfalls in den Fig. 3 und 4 gezeigt, weist die erste Klinke 25 eine erste Klinkenrolle 35 und die zweite Klinke 27 eine zweite Klinkenrolle 37 auf, mit denen die beiden Klinken 25, 27 in die ersten Rastpositionen 39, 43 bzw. in die zweiten Rastpositionen 39, 43 bringbar sind, so dass durch die Ausbildung der ersten Klinkenrolle 35 und der zweiten Klinkenrollen 37 und ihren zugeordneten ersten Rastpositionen 39, 43 und zweiten Rastpositionen 39, 43 das Abtriebselement 29 gegen ein Verdrehen gesichert ist.

An dieser Stelle wird erneut auf die Fig. 2 verwiesen, da hier der erfindungsgemäße Kraftspeicher 1 eine Klinkenzugfeder 47 zeigt. Diese Klinkenzugfeder 47 ist insbesondere dafür vorgesehen, dass sie die erste Klinke 25 und die zweite Klinke 27 mechanisch koppelt und die erste Klinke 25 und die zweite Klinke 27 gegen eine Außenkontur 30, wie hier gegen eine Kurve, des Abtriebselements 29 vorspannt, so dass die erste Klinkenrolle 35 und die zweite Klinkenrolle 37 über die Klinkenzugfeder47 in die ersten Rastposition 39, 43 bzw. zweite Rastposition 41, 45 des Abtriebselements 29 bringbar sind bzw. in diese gedrückt werden.

Ferner sieht der erfindungsgemäße Kraftspeicher 1 vor, wie in allen Fig. 1 bis 4 gezeigt, dass eine Koppel 19 die Kurbel 13 und die Schwinge 17 mechanisch koppelt und das elastische Element vorzugsweise eine Feder 15 ist. Die Feder 15 ist dabei, wie ebenfalls in allen bisher beschriebenen Fig. 1 bis 4 gezeigt, als Schenkelfeder ausgebildet. Hierzu weist die Schenkelfeder 15 zwei Schenkel 49, 51 auf, die abwechselnd mit einem Federanschlag 53 des Abtriebselements 29 und einem Federanschlag 55 der Schwinge 17 zusammenwirken. Insbesondere ist der Kraftspeicher 1 derart ausgestaltet, dass bei einem Schwenken der Schwinge 17 ein erster Schenkel 51 der Schenkelfeder 15 durch den Federanschlag 53 des Abtriebselements 29 festgehalten und ein zweiter Schenkel 55 der Schenkelfeder 15 mitgenommen wird, so dass dadurch die Schenkelfeder 15 spannbar ist.

Das Abtriebselement 29 ist vorzugsweise ein Lastumschalterantriebsrad. Auf eine nähere Beschreibung und Darstellung des Abtriebselements 29 als Lastumschalterantriebsrad wird aus Übersichtlichkeitsgründen verzichtet, da diese im Stand der Technik allseits bekannt und gebräuchlich sind.

Anhand der bereits beschriebenen Merkmale zu den Fig. 1 bis 4 wird kurz die Funktionsweise des erfindungsgemäßen Kraftspeichers 1 erläutert. Die von der Antriebswelle 11 angetriebene Kurbel 13 überträgt durch die mechanische Kopplung eine Drehbewegung auf die Koppel 19, so dass die mit einer Drehbewegung angetriebene Koppel 19 durch die mechanische Verbindung mit der Schwinge 17 ein Schwenken der Schwinge 17 ermöglicht. Durch das Schwenken der Schwinge 17 wird zum einen die Feder 15 gespannt und auch beispielsweise die erste Schwingenrolle 21 gegen die erste Klinke 25 gedrückt und damit die erste Klinke 25 um das erste Klinkenlager 31 gedreht. Dadurch wird auch die erste Klinkenrolle 35 aus ihrer ersten Rastposition 39 bewegt, was wiederum bedeutet, dass die Fixierung des Abtriebselements 29 aufgehoben wird. Nach dieser Umschaltung wechselt somit die erste Klinkenrolle 35 von der ersten Rastposition 39 in die zweite Rastposition 41 (siehe hierzu Fig. 3 und 4), wobei dabei gleichzeitig die zweite Klinkenrolle 37 von der zweiten Rastposition 45 in die erste Rastposition 43 wechselt (siehe hierzu ebenfalls Fig. 3 und 4). Haben die erste Klinkenrolle 35 und die zweite Klinkenrolle 37 wieder eine erste Rastposition 39, 43 bzw. zweite Rastposition 41, 45 erreicht, befindet sich der erfindungsgemäße Kraftspeicher 1 wieder in einer Endstellung und die Lastumschaltefstellung ist fixiert.

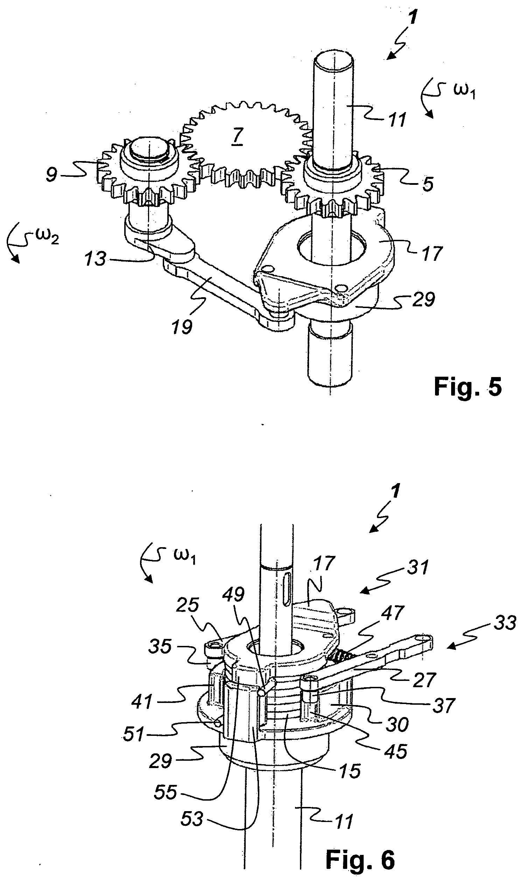

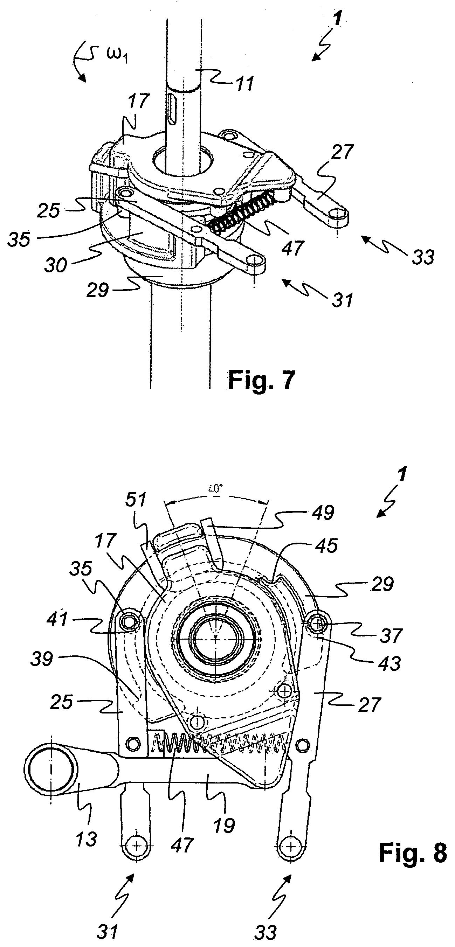

Da bereits alle Merkmale in den Fig. 1 bis 4 beschrieben sind und die weiteren Fig. 5 bis 8 lediglich weitere Perspektivansichten nach den Fig. 1 bis 4 zeigen, wird auf eine weitere Figurenbeschreibung an dieser Stelle verzichtet.

Die Erfindung wurde unter Bezugnahme auf bevorzugte Ausführungsformen beschrieben. Es ist jedoch für jeden Fachmann selbstverständlich, dass Abwandlungen und Änderungen vorgenommen werden können, ohne dabei den Schutzbereich der nachstehenden Ansprüche zu verlassen. Die voran stehend erörterten Ausführungsbeispiele dienen lediglich zur Beschreibung der beanspruchten Lehre, schränken diese jedoch nicht auf die Ausführungsbeispiele ein.

### Bezugszeichenliste

- 1: Kraftspeicher
- 5: erstes Zahnrad
- 7, 9: weiteres Zahnrad
- 11: Antriebswelle
- 13: Kurbel
- 15: elastisches Element, Feder
- 17: Antriebselement, Schwinge
- 19: Koppel
- 21: erste Schwingenrolle
- 23: zweite Schwingenrolle
- 25: erste Klinke
- 27: zweite Klinke
- 29: Abtriebselement
- 30: Außenkontur
- 31: erstes Klinkenlager
- 33: zweites Klinkenlager
- 35: erste Klinkenrolle
- 37: zweite Klinkenrolle
- 39: erste Rastpositiön der ersten Klinke
- 41: zweite Rastposition der ersten Klinke
- 43: erste Rastposition der zweiten Klinke
- 45: zweite Rastposition der zweiten Klinke
- 47: Klinkenzugfeder
- 49: erster Schenkel
- 51: zweiter Schenkel
- 53: Federanschlag des Abtriebselements
- 55: Federanschlag der Schwinge
- ω₁: Drehwinkel der Antriebswelle
- ω₂: Drehwinkel der Kurbel

## Patentansprüche

1. Kraftspeicher (1) für einen Laststufenschalter, mit einem an einer drehbaren Antriebswelle (11) angeordneten ersten Zahnrad (5), das über mindestens ein weiteres Zahnrad (7, 9) eine Kurbel (13) antreibt, wobei die Kurbel (13) mit einem elastischen Element (15) mechanisch in Verbindung steht, das beim Aufziehen eines Antriebselements (17) spannbar ist und wobei ein Abtriebselement (29) nach dem Spannen des elastischen Elements (15) auslösbar ist und sich sprungartig schwenkt,
**dadurch gekennzeichnet, dass**
das Antriebselement eine Schwinge (17) ist, die eine erste Schwingenrolle (21) und eine zweite Schwingenrolle (23) aufweist, die jeweils im Wechsel eine erste Klinke (25) und eine zweite Klinke (27) betätigen, wobei der ersten Klinke (25) am Abtriebselement (29) eine erste Rastposition (39) und eine zweite Rastposition (41) und der zweiten Klinke (27) am Abtriebselement (29) ebenfalls eine erste Rastposition (43) und eine zweite Rastposition (45) zugeordnet sind, so dass die erste Klinke (25) und die zweite Klinke (27), in Abhängigkeit von der Stellung der Schwinge (17), wechselseitig sich in der ersten Rastposition (39, 43) und in der zweiten Rastposition (41, 45) befinden.

2. Kraftspeicher (1) nach Anspruch 1, wobei die erste Klinke (25) eine erste Klinkenrolle (35) und die zweite Klinke (27) eine zweite Klinkenrolle (37) aufweist, mit denen die beiden Klinken (25, 27) in die ersten Rastpositionen (39, 43) bzw. in die zweiten Rastpositionen (41, 45) bringbar sind.

3. Kraftspeicher (1) nach Anspruch 1 oder 2, wobei die erste Klinke (25) um ein erstes Klinkenlager (31) und die zweite Klinke (27) um ein zweites Klinkenlager (33) schwenkbar ausgebildet ist.

4. Kraftspeicher (1) nach Anspruch 1, wobei eine Koppel (19) die Kurbel (13) und die Schwinge (17) mechanisch koppelt.

5. Kraftspeicher (1) nach Anspruch 1, wobei das elastische Element eine Feder (15) ist, die als Schenkelfeder ausgebildet ist.

6. Kraftspeicher (1) nach Anspruch 1 oder 5, wobei die Feder (15) zwei Schenkel (49, 51) aufweist, die abwechselnd mit einem Federanschlag (53) des Abtriebselements (29) und einem Federanschlag (55) der Schwinge (17) zusammenwirken

7. Kraftspeicher (1) nach einem der vorangehenden Ansprüche, wobei eine Klinkenzugfeder (47) die erste Klinke (25) und die zweite Klinke (27) mechanisch koppelt und die erste Klinke (25) und die zweite Klinke (27) gegen eine Außenkontur (30) des Abtriebselements (29) vorspannt.

8. Kraftspeicher (1) nach Anspruch 1, wobei das Abtriebselement (29) ein Lastumschalterantriebsrad ist.

## Claims

1. Energy accumulator (1) for an on-load tap changer, with a first gearwheel (5), which is arranged on a rotatable drive shaft (11) and which drives a crank (13) by way of at least one further gearwheel (7, 9), wherein the crank (13) is mechanically connected with a resilient element (15) which can be stressed when the drive element (17) is drawn up and wherein a drive output element (29) after stressing of the resilient element (15) can be triggered and abruptly pivots,
**characterised in that**
the drive element is a rocker (17), which comprises a first rocker roller (21) and a second rocker roller (23) respectively actuating in alternation a first latch (25) and a second latch (27), wherein a first detent position (39) and a second detent position (41) are associated with the first latch (25) at the drive output element (29) and similarly a first detent position (43) and a second detent position (45) are associated with the second latch (27) at the drive output element (29) so that the first latch (25) and the second latch (27) are disposed in alternation in the first detent position (39, 43) and the second detent position (41, 45) in dependence on the setting of the rocker (17).

2. Energy accumulator (1) according to claim 1, wherein the first latch (25) comprises a first latch roller (35) and the second latch (27) comprises a second latch roller (37), by which the two latches (25, 27) can be brought into the first detent positions (39, 43) or into the second detent positions (41, 45).

3. Energy accumulator (1) according to claim 1 or 2, wherein the first latch (25) is constructed to be pivotable about a first latch bearing (31) and the second latch (27) is constructed to be pivotable about a second latch bearing (33).

4. Energy accumulator (1) according to claim 1, wherein a coupler (19) mechanically couples the crank (13) and the rocker (17).

5. Energy accumulator (1) according to claim 1, wherein the resilient element is a spring (15), which is constructed as a torsion spring.

6. Energy accumulator (1) according to claim 1 or 5, wherein the spring (15) has two legs (49, 51) which co-operate in alternation with a spring abutment (53) of the drive output element (29) and a spring abutment (55) of the rocker (17).

7. Energy accumulator (1) according to any one of the preceding claims, wherein a latch tension spring (47) mechanically couples the first latch (25) and the second latch (27) and biases the first latch (25) and the second latch (27) against an external profile (30) of the drive output element (29).

8. Energy accumulator (1) according to claim 1, wherein the drive output element (29) is a load changeover switch drive wheel.

## Revendications

1. Accumulateur de force (1) destiné à un commutateur à gradins en charge comprenant un premier pignon (5) monté sur un arbre d'entraînement (11) mobile en rotation et qui entraîne une manivelle (13) par l'intermédiaire d'au moins un autre pignon (7, 9), cette manivelle (13) étant en liaison mécanique avec un élément élastique (15) pouvant être tendu en tirant un élément d'entraînement (17), et un élément de sortie (29) pouvant être déclenché après la mise sous tension de l'élément élastique (15) et pivotant brusquement,
**caractérisé en ce que**
l'élément d'entraînement est constitué par une bielle oscillante (17) comportant un premier galet oscillant (21) et un second galet oscillant (23) qui actionnent en alternance un premier cliquet (25) et un second cliquet (27), au premier cliquet (25) étant associées sur l'élément de sortie (29) une première position d'encliquetage (39) et une seconde position d'encliquetage (41) et au second cliquet (27) étant également associées sur l'élément de sortie (29) une première position d'encliquetage (43) et une seconde position d'encliquetage (45) de sorte que le premier cliquet (25) et le second cliquet (27) soient respectivement situés en fonction de la position de la bielle oscillante (17) dans la première position d'encliquetage (39, 43) et dans la seconde position d'encliquetage (41, 45).

2. Accumulateur de force (1) conforme à la revendication 1,
dans lequel le premier cliquet (25) comprend un premier galet de cliquet (35) et le second cliquet (27) comprend un second galet de cliquet (37) au moyen desquels les deux cliquets (25, 27) peuvent être positionnés dans les premières positions d'encliquetage (39, 43) ou dans les secondes positions d'encliquetage (41, 45).

3. Accumulateur de force (1) conforme à la revendication 1 ou 2,
dans lequel le premier cliquet (25) est monté pivotant autour d'un premier palier de cliquet (31) tandis que le second cliquet (27) est monté pivotant autour d'un second palier de cliquet (33).

4. Accumulateur de force (1) conforme à la revendication 1,
dans lequel une bielle (19) accouple mécaniquement la manivelle (13) et la bielle oscillante (17).

5. Accumulateur de force (1) conforme à la revendication 1,
dans lequel l'élément élastique (15) est constitué par un ressort et réalisé sous la forme d'un ressort spiral.

6. Accumulateur de force (1) conforme à la revendication 1 ou 5,
dans lequel le ressort (15) comporte deux branches (49, 51) qui coopèrent respectivement avec une butée élastique (53) de l'élément de sortie (29) et avec une butée élastique (55) de la bielle oscillante (17).

7. Accumulateur de force (1) conforme à l'une des revendications précédentes,
dans lequel un ressort de traction de cliquets (47) accouple mécaniquement le premier cliquet (25) et le second cliquet (27), et le premier cliquet (25) et le second cliquet (27) sont précontraints contre le contour externe (30) de l'élément de sortie (29).

8. Accumulateur de force (1) conforme à la revendication 1,
dans lequel l'élément de sortie (29) est constitué par une roue d'entraînement d'un commutateur de réglage en charge.
